# FASCICULE DE BREVET EUROPEEN

(11) **EP 4 176 008 B1**
(45) Date de publication et mention de la délivrance du brevet: **18.03.2026**
(21) Numéro de dépôt: 21748909.5
(22) Date de dépôt: 01.07.2021
(51) Int. Cl.: C08L 95/00, C04B 24/24, E01C 7/24

(54) **EMULSION CATIONIQUE DE REPANDAGE**
KATIONISCHE SPREITEMULSION
CATIONIC SPREADING EMULSION

(30) Priorité: 01.07.2020 FR 2006961
(43) Date de publication de la demande: 10.05.2023
(73) Titulaire: Vinci Construction, 92000 Nanterre (FR)
(72) Inventeur: LEBARBE, Thomas, 33980 AUDENGE (FR); DELFOSSE, Frédéric, 33600 PESSAC (FR); PIERRE, Marie-Laure, 33140 VILLENAVE D'ORNON (FR)
(74) Mandataire: Regimbeau
(86) Numéro de dépôt international: PCT/FR2021/051207
(87) Numéro de publication internationale: WO 2022/003296

(56) Documents cités:
- EP-A2- 0 246 063
- CA-A- 1 114 545

## Description

### DOMAINE DE L'INVENTION

La présente invention concerne le domaine des émulsions de liants hydrocarbonés dites « de répandage », en particulier des émulsions cationiques de liants hydrocarbonés. De telles émulsions sont utiles à la préparation des enduits superficiels d'usure, des couches d'accrochage, des couches de surface de type fog seal et des joints de pavés. Plus particulièrement, la présente invention porte sur l'utilisation d'un polymère anionique pour améliorer l'adhésivité immédiate d'une émulsion cationique de liant hydrocarboné à des particules solides.

### ARRIERE PLAN DE L'INVENTION

Les émulsions de liants hydrocarbonés, en particulier les émulsions de bitume, sont utilisées de manière courante pour diverses applications routières, où elles peuvent être répandues seules pour obtenir par exemple des couches d'accrochage, des couches d'imprégnation, et des couches de surface (type fog seal), soit en présence de granulats pour réaliser des enduits superficiels d'usure. Les émulsions de liants hydrocarbonés peuvent également être mélangées à des granulats pour obtenir des enrobés à froid, soit juste avant la pose (Matériaux Bitumineux Coulés à froid et recyclage en place), soit en centrales d'enrobage (enrobés stockables, Grave-Emulsion, Bétons Bitumineux à l'Emulsion). La présente invention concerne les applications routières où les émulsions sont répandues.

Les émulsions de bitume sont obtenues par dispersion de gouttelettes de bitume dans une phase aqueuse. Les gouttelettes de bitume sont stabilisées dans la phase continue par des composés tensioactifs qui peuvent être anioniques, non-ioniques, amphotériques ou cationiques. Les émulsions de bitume utilisées dans l'industrie routière sont majoritairement de nature cationique. Ces émulsions sont définies et caractérisées selon différentes normes et spécifications. La norme Européenne EN 13808 : 2013 définit les spécifications techniques des émulsions cationiques de bitume employées dans la construction routière, l'entretien des infrastructures routières, les aéroports et les autres revêtements. Cette norme Européenne s'applique pour les émulsions de bitume, les émulsions de bitume fluxé, les émulsions de bitume modifié aux polymères et les émulsions de bitume fluxé modifié aux polymères, qui incluent également les émulsions de bitume modifiées au latex.

Les tensioactifs cationiques sont plus versatiles comparés aux tensioactifs anioniques car les tensioactifs cationiques permettent la fabrication d'émulsions de bitume qui peuvent être employées avec une large gamme de granulats (particules solides minérales), spécifiquement les granulats qui contiennent différentes concentrations en silice. Les matériaux composés de silice portent majoritairement des charges négatives à leur surface et les émulsions cationiques de bitume sont donc favorisées du fait de la charge positive des gouttelettes de bitume qui permet une attraction des gouttelettes à la surface des granulats. Cette attraction permet une cinétique de rupture (démulsification) rapide et ainsi une réouverture rapide du revêtement au trafic.

La rupture des émulsions de bitume est liée à une multitude de phénomènes physico-chimiques qui s'opèrent lors de la mise au contact de l'émulsion avec les granulats. Tout d'abord les tensioactifs cationiques ainsi que les gouttelettes de bitume chargées positivement sont attirés à la surface électronégative des particules solides minérales par attraction électrostatique et électrophorèse. Des phénomènes d'hydrolyse de la surface des particules solides minérales peuvent également entrainer une remontée de pH qui neutralise les tensioactifs cationiques. Ces phénomènes entrainant un appauvrissement de la densité de charges cationiques aux interfaces bitume/eau, les gouttelettes de bitume se retrouvent déstabilisées et des phénomènes de floculation, coalescence et formation de film du liant entrainent la rupture complète de l'émulsion et la prise du matériau/revêtement.

Cependant, malgré la déstabilisation des émulsions de bitume au contact des particules solides minérales, la rupture complète de l'émulsion est en partie conditionnée par l'évaporation de l'eau. L'utilisation d'émulsions de bitume est parfois limitée à certains domaines d'utilisation spécifiques ou bien à certaines conditions climatiques du fait qu'elles présentent certains inconvénients, à savoir a) elles sont sensibles à la pluie au jeune âge et b) il faut un temps relativement long avant que l'agent liant ne développe sa consistance maximale.

Dans le cas des émulsions de bitume pour les applications de répandage et notamment pour un enduit superficiel d'usure ou une couche d'accrochage, certaines techniques sont connues de l'homme de l'art pour accélérer la cinétique de rupture de l'émulsion. Citons à titre d'exemple, le répandage simultané sur la chaussée d'une émulsion de bitume et d'un agent de rupture projeté dans les jets de l'émulsion qui permet une rupture rapide et homogène de l'émulsion au moment de son épandage.

EP 0491107 décrit une composition à deux composants comprenant une émulsion de bitume de type anionique ou cationique et un additif de rupture comprenant une substance neutralisante.

FR 2760461 décrit une émulsion de bitume comprenant un agent rupteur encapsulé permettant le contrôle de la rupture de l'émulsion, la rupture des capsules résultant d'un effet mécanique. L'agent rupteur peut être une solution aqueuse d'une base forte minérale (NaOH) ou un agent tensioactif anionique (comme un alkysulfate, un alkylsulfonate ou alkylsulfosuccinate ou un de leurs mélanges) ou un agent polymérique anionique.

EP 1275625 décrit l'utilisation d'un liant hydraulique en suspension dans une émulsion de bitume afin d'accélérer la rupture de l'émulsion. L'invention concerne spécifiquement un ciment traité avec du stéarate de magnésium afin de le rendre hydrophobe et ainsi garantir la stabilité de l'émulsion de bitume modifiée par le liant hydraulique. Le liant hydraulique devient actif dans la formule lors de la mise en contact de l'émulsion de bitume avec les particules minérales.

EP 0246063 décrit un procédé pour réduire le temps de prise d'une émulsion cationique de bitume, procédé qui consiste à incorporer à ladite émulsion une quantité efficace d'une solution d'un émulsionnant cationique et une quantité suffisante d'un polymère choisi dans le groupe des polymères d'acide acrylique, d'acide méthacrylique, de leurs mélanges ou de leurs sels pour former une émulsion exploitable qui durcisse en moins d'environ 40 minutes. Le polymère de bas poids moléculaire (inférieur à 100 000 g/mol) est généralement ajouté à ladite émulsion cationique de bitume sous la forme d'un mélange comprenant 0,1 à 2,0 parties en poids sur base sèche dudit polymère de bas poids moléculaire et 100 parties en poids sur base sèche d'un latex de polymère. Le mélange est réalisé sous la forme de latex anioniques qui sont ensuite rendus cationiques par addition d'une proportion allant jusqu'à 10% par rapport au poids du polymère total, d'un émulsionnant cationique et ajustement du pH à une valeur inférieure à environ 5.

L'accélération de la cinétique de rupture des émulsions est l'un des critères de qualité des applications de répandage des émulsions de bitume. Cependant, la cinétique de rupture ne permet pas de répondre à l'ensemble des attentes et exigences de ces applications. L'accélération de la cinétique de rupture des émulsions ne dicte pas le comportement au jeune âge des produits bitumineux. Ainsi, la seule accélération de la cinétique de rupture des émulsions n'apporte pas une solution aux problèmes potentiels de lixiviation des produits bitumineux au jeune âge ou aux problèmes de gravillonnage au jeune âge pour un enduit superficiel d'usure. En effet, seule une adhésivité forte et rapide du liant hydrocarboné aux particules minérales diminue la sensibilité des produits bitumineux au jeune âge à la pluie. De plus, une émulsion possédant un indice de rupture faible impliquera une rupture rapide de l'émulsion mais une mauvaise adhésivité aux granulats du fait d'un mouillage insuffisant de l'émulsion aux granulats.

Ainsi, un besoin demeure pour la mise à disposition d'une solution simple à mettre en oeuvre permettant de modifier le comportement au jeune âge des produits bitumineux appliqués par répandage, en particulier permettant de limiter la lixiviation/lessivage des produits bitumineux au jeune âge par les eaux pluviales sans impacter négativement les propriétés des émulsions (stabilité au stockage, indice de rupture, adhésivité, ...).

### BREVE DESCRIPTION DE L'INVENTION

La présente invention porte sur l'utilisation d'un polymère anionique pour améliorer l'adhésivité immédiate d'une émulsion cationique de liant hydrocarboné de répandage à des particules solides lors de la préparation d'un produit bitumineux, ledit polymère anionique comprenant uniquement des groupements ionisables acides dont le pKa varie de 4 à 5, ayant un taux d'anionicité variant de 50 à 100% et un poids moléculaire variant de 500 à 500 000 g/mol.

La présente invention porte également sur un procédé d'amélioration de l'adhésivité immédiate d'une émulsion cationique de liant hydrocarboné de répandage à des particules solides lors de la préparation d'un produit bitumineux, ledit procédé comprenant la préparation d'une émulsion cationique de liant hydrocarboné comprenant un polymère anionique tel que présentement décrit.

### DESCRIPTION DETAILLEE DE L'INVENTION

De manière inattendue, il a été mis en évidence que des émulsions cationiques de liant hydrocarboné comprenant un polymère anionique tel que défini ci-dessous présentent une adhésivité immédiate améliorée sans modification des propriétés de l'émulsion par rapport au stockage et aux exigences de l'usage auquel elles sont destinées (viscosité, adhésivité passive, cohésion). Avantageusement, les propriétés des émulsions demeurent conformes à la norme NF EN 13808 (2013) et aux propriétés requises pour la préparation de produits bitumineux par répandage d'une émulsion cationique de liant hydrocarboné.

Le terme « répandage » tel qu'utilisé dans la présente description désigne l'action d'appliquer une émulsion de liant hydrocarboné sur une surface. L'émulsion peut être appliquée sur une surface comprenant des particules solides telles que décrites ci-dessous et/ou être recouverte après application de particules solides telles que décrites ci-dessous. Ladite surface peut être une couche de particules solides ou un support. Les techniques de répandage se distinguent ainsi des techniques d'enrobage dans lesquelles l'émulsion et les particules solides sont mélangées et appliquées. Il est donc entendu que les émulsions présentement décrites sont des émulsions de répandage par opposition aux émulsions d'enrobage.

Ainsi, les émulsions cationiques de liant hydrocarboné comprenant un polymère anionique tel que défini ci-dessous présentent une bonne stabilité (stockage, transport), offrent une bonne mouillabilité des particules solides, une forte adhésivité active (adhésivité immédiate) et passive aux particules solides, une bonne cohésion et de manière avantageuse permettent l'obtention d'une consistance définitive plus rapide (remontée en cohésion) que celles des produits bitumineux communément préparés.

De telles émulsions permettent ainsi la préparation d'enduits superficiels d'usure, de couches d'accrochage, de couches de surface, en particulier de type fog seal, et de joints de pavés offrant une meilleure robustesse au jeune âge. Par exemple, lors de la préparation d'enduits superficiels d'usure, une bonne adhésivité immédiate quantitative aux particules solides (granulats) est obtenue. La cohésion obtenue permet la circulation sur l'enduit seulement 15 à 30 minutes après application de l'émulsion. Les risques de lixiviation sont ainsi minimisés.

### Polymères anioniques et leur utilisation

La présente invention porte sur l'utilisation d'un polymère anionique tel que défini ci-dessous pour améliorer l'adhésivité immédiate d'une émulsion cationique de liant hydrocarboné à des particules solides lors de la préparation d'un produit bitumineux par répandage de l'émulsion.

L'amélioration de l'adhésivité immédiate se mesure par comparaison de l'adhésivité immédiate d'une émulsion cationique de liant hydrocarboné comprenant un polymère anionique tel que défini ci-dessous à des particules solides à celle d'une émulsion cationique de liant hydrocarboné ne comprenant pas un polymère anionique tel que défini ci-dessous à des particules solides. L'adhésivité immédiate est mesurée par un protocole modifié de l'essai de la norme TS16346 de 2013, telle que modifiée en 2019. Le protocole modifié de l'essai de la norme TS16346 de 2013 est décrit dans le document N123-A2f de l'AFNOR (2019). Avantageusement, selon ce protocole modifié, une adhésivité immédiate quantitative supérieure à 90% après moins de huit lavages à l'eau, voire moins de quatre lavages à l'eau, voire un ou deux lavages à l'eau, après un temps de repos en masse compacte de 10 minutes, est obtenue.

De manière avantageuse, les polymères anioniques décrits ci-dessous améliorent l'adhésivité immédiate des émulsions cationiques de liant hydrocarboné tout en n'affectant pas négativement les propriétés des émulsions de liant hydrocarboné. Les émulsions demeurent stables lors de leur préparation, de leur stockage et de leur transport. De bonnes performances à l'essai d'adhésivité passive selon la norme NF EN 13614 (Juin 2011) sont également obtenues. De manière avantageuse, les polymères anioniques décrits ci-dessous permettent d'accélérer la rupture des émulsions cationiques de liant hydrocarboné.

La présente invention porte également sur un procédé pour améliorer l'adhésivité immédiate d'une émulsion cationique de liant hydrocarboné à des particules solides lors de la préparation d'enduits superficiels d'usure, de couches d'accrochage, de couches de surface, en particulier de type fog seal, et de joints de pavés par répandage de l'émulsion cationique qui comprend l'addition d'un polymère anionique tel que décrit ci-dessous à une émulsion cationique de liant hydrocarboné. En d'autres termes, le procédé comprend la préparation d'une émulsion cationique de liant hydrocarboné comprenant l'addition d'un polymère anionique tel que décrit ci-dessous à une émulsion cationique de liant hydrocarboné. L'émulsion cationique de liant hydrocarboné peut être telle que décrite ci-dessous.

La présente invention porte également sur un procédé pour réduire la lixiviation des produits bitumineux de type enduits superficiels d'usure, couches d'accrochage, couches de surface de type fog seal et joints de pavés au jeune âge qui comprend la préparation d'un produit bitumineux par répandage, typiquement par pulvérisation, d'une émulsion cationique de liant hydrocarboné telle que décrite ci-dessous.

Les produits bitumineux préparés au moyen d'une telle émulsion peuvent être tels que décrits ci-dessous.

### Polymères anioniques

Les polymères anioniques utiles dans le cadre de la présente invention sont des polymères portant des groupements ionisables acides. Ils peuvent être désignés sous le terme de polyélectrolytes. Les groupements ionisables acides peuvent être sous forme libre ou être neutralisés, par exemple par des hydroxydes de sodium, de potassium, de lithium ou d'ammonium, pour donner les sels correspondants. Ainsi, les polymères anioniques utiles dans le cadre de la présente invention peuvent être sous forme libre ou sous forme de sels, tels que des sels de sodium ou d'ammonium.

Les polymères anioniques utiles dans le cadre de la présente invention portent uniquement des groupements ionisables acides dont le pka varie de 4 à 5.

Le terme « pKa » tel qu'utilisé dans la présente description désigne le logarithme de la constante d'acidité d'un acide, c'est-à-dire la constante d'équilibre de la réaction de dissociation d'un acide. Le pKa est propre à chaque espèce acide et dépend du solvant et de la température considérés pour la réaction de dissociation. Dans le contexte de la présente invention, les valeurs de pKa sont exprimées pour une réaction de dissociation réalisée dans l'eau à une température de 25°C.

Il a été montré que des polymères anioniques portant des groupements ionisables acides dont le pka est inférieur à 4 conduisent à une rupture prématurée de l'émulsion lors du stockage. Les polymères anioniques portant des groupements ionisables acides dont le pka est supérieur à 5 conduisent quant à eux à des temps de rupture trop long.

Des exemples de groupements ionisables acides dont le pka varie de 4 à 5 incluent les groupements carboxyliques (COOH) et phosphoniques. Les polymères anioniques peuvent donc comprendre des groupements ionisables acides choisis parmi les groupements carboxyliques, phosphoniques et leur mélange. Ainsi, les polymères anioniques utiles dans le cadre de la présente invention peuvent résulter de la polymérisation de monomères ionisables acides comprenant un ou plusieurs groupements carboxyliques et/ou phosphoniques. Les monomères ionisables comprenant un ou plusieurs groupements carboxyliques peuvent ainsi être choisis dans le groupe comprenant l'acide acrylique, l'acide méthacrylique, l'acide maléique, l'acide itaconique, l'acide fumarique et leurs mélanges.

Les polymères anioniques utiles dans la présente invention peuvent être des homopolymères, des copolymères ou leurs mélanges. Les copolymères peuvent résulter de la copolymérisation de monomères ionisables acides différents, tels que les monomères décrits ci-dessus ou de la copolymérisation de monomères ionisables acides avec d'autres co-monomères, par exemple choisis parmi l'acrylamide, les esters d'acide acrylique et les esters d'acide méthacrylique.

Dans certains modes de réalisation, les polymères anioniques utiles dans le cadre de la présente invention correspondent à la formule (I) suivante : 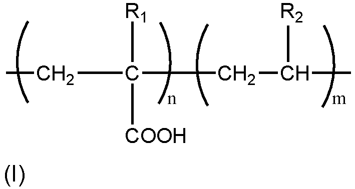 dans lequel
R₁ est un hydrogène, un groupement C₁-C₆ alkyle ou un groupement -CH₂COOH,
R₂ est choisi parmi les groupements NH₂-CO- ou R₃-O-CO-,
R₃ est un groupement C₁-C₆ alkyle ou un groupement phosphonique,
n et m sont tels que le ratio n/(n+m) est supérieur ou égal à 0,5, voire supérieur ou égal à 0,7.

Le composé de formule (I) correspond généralement à un poly(carboxylate) obtenu par polymérisation de l'acide acrylique ou de l'acide méthacrylique.

Par ailleurs, les polymères anioniques utiles dans le cadre de la présente invention présentent une forte anionicité. La proportion en nombre de monomères ionisables par rapport au nombre total de monomères (désigné ici taux d'anionicité) varie de 50% à 100%, voire de 70% à 100%. Elle est de préférence de 100%. La forte anionicité des polymères anioniques permet de neutraliser les particules de bitume chargées positivement qui s'en trouvent déstabilisées.

Le poids moléculaire des polymères anioniques utiles dans le cadre de la présente invention varie de 500 à 500 000 g/mol, de préférence de 1000 à 250 000, encore plus préférentiellement de 2000 à 150 000 g/mol. De tels poids moléculaire assurent une bonne diffusion des charges ioniques autour des particules de bitume.

Des exemples de polymères anioniques utiles dans le cadre de la présente invention incluent les homopolymères d'acide acrylique, les copolymères d'acide acrylique/acrylamide, les copolymères d'acide maléique/acide acrylique, les homopolymères d'acide méthacrylique, les copolymères d'acide acrylique/acide méthacrylique, les copolymères d'acide acrylique, acrylate, les terpolymères d'acide acrylique.

Des exemples de polymères anioniques utiles dans le cadre de la présente invention incluent tout particulièrement les produits commercialisés par SNF-Floerger sous les dénominations FLOSPERSE 3030 NCA W 30 et FLOSPERSE CT 39 A.

### Emulsion cationique de liant hydrocarboné

L'émulsion cationique de répandage comprend :
- un liant hydrocarboné ;
- une phase aqueuse (typiquement de l'eau) ;
- un agent tensioactif cationique ;
- un acide ; et
- un polymère anionique tel que défini précédemment ou un de ses sels.

Le pH de la phase aqueuse est typiquement fixé à une valeur comprise entre 1,5 et 2,5 à l'aide d'un acide (acide chlorhydrique, acide orthophosphorique, ...) afin que les fonctions ionisables du polymère anionique tel que défini précédemment soient sous forme non-ionique (acide carboxylique ou acide phosphonique).

De manière avantageuse, l'émulsion cationique présente une adhésivité immédiate aux particules solides selon un protocole modifié de l'essai de la norme TS16346 (N123-A2f , 2019) supérieure à 90 % après moins de huit lavages à l'eau, voire moins de quatre lavages à l'eau, voire un ou deux lavages à l'eau, après un temps de repos en masse compacte de 10 minutes.

L'émulsion cationique comprend typiquement de 0,005 à 0,5%, voire de 0,01% à 0,1%, en masse d'un polymère anionique ou de leurs mélanges par rapport à la masse totale de l'émulsion cationique.

Les différents constituants de l'émulsion cationique sont tels que décrits ci-dessous.

### Liant hydrocarboné

Le terme "liant hydrocarboné " tel qu'utilisé dans la présente description désigne tout liant hydrocarboné d'origine fossile, végétale ou de synthèse utilisable pour la réalisation de produits dits « bitumineux ».

Le liant hydrocarboné peut être pur ou modifié, notamment par ajout de polymères.

Le liant hydrocarboné peut être un liant mou à dur, avantageusement d'un grade allant de 10/20 à 160/220.

Dans certains modes de réalisation, le liant hydrocarboné est un bitume pur ou un bitume modifié par des polymères tels que décrits ci-dessous.

Les « polymères » modifiant le bitume auxquels il est fait référence ici, peuvent être choisis parmi les polymères naturels ou synthétiques. Il s'agit par exemple des polymères de la famille des élastomères, synthétiques ou naturels, et de manière indicative et non limitative :
- les copolymères statistiques, multi-séquencés ou en étoile, de styrène et de butadiène ou d'isoprène en toutes proportions (en particulier copolymères blocs de styrène-butadiène-styrène (SBS), de styrène-butadiène (SB, SBR pour styrène-butadiène rubber), de styrène-isoprène-styrène (SIS) ou les copolymères de même famille chimique (isoprène, caoutchouc naturel, ...), éventuellement réticulés in-situ,
- les copolymères d'acétate de vinyle et d'éthylène en toutes proportions,
- les copolymères de l'éthylène et d'esters de l'acide acrylique, méthacrylique ou de l'anhydride maléique, les copolymères et terpolymères d'éthylène et de méthacrylate de glycidyl, et
- les polyoléfines.

Les polymères modifiant le bitume peuvent également être choisis parmi les polymères de récupération, par exemple des « poudrettes de caoutchouc » ou autres compositions à base de caoutchouc réduits en morceaux ou en poudre, par exemple obtenues à partir de pneus usagés ou d'autres déchets à base de polymères (câbles, emballage, agricoles, ...) ou encore tout autre polymère couramment utilisé pour la modification des bitumes tels que ceux cités dans le Guide Technique écrit par l'Association Internationale de la Route (AIPCR) et édité par le Laboratoire Central des Ponts et Chaussées "Use of Modified Bituminous Binders, Special Bitumens and Bitumens with Additives in Road Pavements" (Paris, LCPC, 1999), ainsi que tout mélange en toute proportion de ces polymères.

Il est entendu que les polymères modifiant le bitume tels que décrits ci-dessus sont des polymères différents des polymères utiles pour améliorer l'adhésivité immédiate des émulsions cationiques de liant hydrocarboné.

### Agent tensioactif cationique et acide

Au cours de la fabrication d'une émulsion, le liant hydrocarboné est dispersé en fines gouttelettes dans la phase continue, par exemple dans l'eau, par une action mécanique. L'ajout d'un agent tensioactif forme un film protecteur autour des gouttelettes, les empêchant de s'agglomérer et permettant ainsi de maintenir le mélange stable et de l'entreposer pendant un certain temps. L'agent tensioactif peut être d'origine pétrolière, végétale, animale ou leur mélanges (par exemple l'agent tensioactif peut être d'origine végétale et pétrolière).

L'agent tensioactif peut être un savon acide, lequel est généralement obtenu par action d'un acide, typiquement de l'acide chlorhydrique, sur une ou deux amines.

Parmi les tensioactifs pertinents en application routière, peuvent être cités les tensioactifs commercialisés par Akzo NOBEL (Redicote^{®} E9, Redicote^{®} EM 44, Redicote^{®} EM 76), les tensioactifs commercialisés par CECA (Dinoram^{®} S, Emulsamine^{®} L60, Polyram^{®} S, Polyram^{®} L 80), les tensioactifs commercialisés par Meadwestvaco (Indulin^{®} R33, Indulin^{®} R66, Indulin^{®} W5). Ces tensioactifs peuvent être utilisés seuls ou en mélanges. L'émulsion comprend un acide qui peut être, par exemple de l'acide chlorhydrique, comme mentionné ci-dessus ou de l'acide orthophosphorique.

### Autres additifs

L'émulsion peut en outre comprendre des additifs couramment utilisés dans le domaine routier, par exemple des dopes d'adhésivité, des cires végétales ou d'origine pétrochimique, des acides gras, des viscosifiants, des épaississants, des agents fluxants. L'émulsion peut contenir un latex synthétique ou naturel. Le terme « latex » tel qu'employé dans la présente description désigne une dispersion de polymères (polyisoprène, SBS, SB, SBR, polymères acryliques, ...) réticulés ou non en phase aqueuse. Ce latex est incorporé dans la phase aqueuse avant émulsification ou en ligne pendant la fabrication de l'émulsion soit encore après fabrication de l'émulsion.

### Préparation de l'émulsion cationique

L'émulsion cationique de répandage est préparée selon des méthodes bien connues de l'homme du métier. Typiquement, dans certains modes de réalisation, le polymère anionique est ajouté à la phase aqueuse avant émulsification.

Ainsi, l'émulsion cationique peut être préparée par un procédé comprenant les étapes suivantes :
a) incorporation d'un polymère anionique tel que défini ci-dessus ou d'un de ses sels à une phase aqueuse comprenant au moins un agent tensioactif cationique, le pH de la phase aqueuse étant compris entre 1,5 et 2,5 ; puis
b) émulsification de la phase aqueuse issue de l'étape a) par addition d'un liant hydrocarboné.

La phase aqueuse est acidifiée par l'ajout d'un acide, de préférence de l'acide chlorhydrique ou de l'acide orthophosphorique.

Le polymère anionique est typiquement ajouté en totalité dans la phase aqueuse lors de l'étape a) avant l'émulsification de l'étape b).

Dans certains modes de réalisation, le polymère anionique est ajouté après émulsification.

Ainsi, l'émulsion cationique peut être préparée par un procédé comprenant les étapes suivantes :
a) Préparation d'une émulsion par addition d'un liant hydrocarboné à une phase aqueuse comprenant au moins un agent tensioactif cationique, le pH de la phase aqueuse étant compris entre 1,5 et 2,5 ;
b) incorporation d'un polymère anionique tel que défini ci-dessus ou d'un de ses sels à l'émulsion issue de l'étape a).

### Produits bitumineux

Les émulsions cationiques comprenant un polymère anionique tel décrit ci-dessus peuvent être utilisés pour préparer par des techniques de répandage une variété de produits bitumineux. Les émulsions cationiques de répandage comprenant un polymère anionique tel décrit ci-dessus peuvent ainsi être utilisés pour préparer des enduits superficiels d'usure, des couches d'accrochage, des couches de surface, en particulier de type fog seal, et des joints de pavés. En revanche, lesdites émulsions cationiques ne sont pas destinées à préparer des produits bitumineux obtenus par enrobage des particules solides avec un liant hydrocarboné, tels des enrobés coulés à froid ou à chaud, des enrobés stockables ou des bétons bitumineux à l'émulsion.

Ainsi, la présente invention porte également sur des produits bitumineux, tels que décrits ci-dessous, préparés au moyen d'une émulsion cationique telle que décrite ci-dessus.

Les produits bitumineux comprenant des particules solides et un liant hydrocarboné peuvent être préparés par un procédé comprenant une étape de mise en contact des particules solides avec une émulsion cationique telle que décrite ci-dessus. L'étape de mise en contact est de préférence réalisée par pulvérisation de l'émulsion cationique sur les particules solides ou bien réalisée par pulvérisation de l'émulsion cationique sur un support suivi éventuellement de l'application de particules solides (par exemple gravillonnage). Typiquement, l'étape de mise en contact des particules solides avec l'émulsion cationique de liant hydrocarboné est réalisée en absence d'agent rupteur. Cependant dans certains modes de réalisation, des agents rupteurs, en particulier une solution basique, peuvent être utilisés par répandage simultané dans le jet d'émulsion afin d'accélérer l'effet des polymères anioniques, tout particulièrement lorsque les particules solides sont de nature acide, en particulier lorsqu'elles comprenant une quantité importante de silice. Une rupture plus rapide et homogène peut ainsi être obtenue.

Ainsi, la présente invention concerne en outre un procédé de répandage d'une émulsion cationique de liant hydrocarboné de répandage pour la préparation d'un produit bitumineux, comprenant la pulvérisation de l'émulsion cationique, ladite émulsion cationique de liant hydrocarboné de répandage comprenant un polymère anionique tel que décrit ci-dessus.

Les produits bitumineux préparés par le procédé de répandage de l'invention sont typiquement choisis parmi des enduits superficiels d'usure, des couches d'accrochage, des couches de surface, en particulier de type fog seal, et des joints de pavés.

Ainsi, la présente invention concerne également un procédé de préparation d'un produit bitumineux comprenant une étape d'application par répandage, typiquement par pulvérisation, d'une émulsion cationique de liant hydrocarboné de répandage en surface d'une couche comprenant des particules solides, ladite émulsion cationique de liant hydrocarboné de répandage comprenant un polymère anionique tel que décrit ci-dessus. La présente invention concerne également un procédé de préparation d'un produit bitumineux comprenant une étape d'application par répandage, typiquement par pulvérisation, d'une émulsion cationique de liant hydrocarboné de répandage en surface d'un support suivi de l'application d'une couche de particules solides, ladite émulsion cationique de liant hydrocarboné de répandage comprenant un polymère anionique tel que décrit ci-dessus.

L'application par répandage de l'émulsion cationique correspond à une mise en contact de l'émulsion cationique de liant hydrocarboné avec la surface d'une couche de particules solides. Par exemple, l'émulsion peut être appliquée sur une surface comprenant des particules solides et/ou être recouverte après application de particules solides.

Typiquement, l'application par répandage s'effectue par pulvérisation de l'émulsion cationique de liant hydrocarboné à la surface de particules solides ou pulvérisation de l'émulsion cationique sur un support suivi éventuellement de l'application de particules solides (par exemple gravillonnage).

Le procédé de préparation d'un produit bitumineux selon l'invention permet en particulier de préparer des produits choisis parmi des enduits superficiels d'usure, des couches d'accrochage, des couches de surface, en particulier de type fog seal, et des joints de pavés.

### Particules solides

Le terme "particules solides " tel qu'utilisé dans la présente description désigne toutes particules solides utilisables pour la réalisation de produits bitumineux, notamment pour la construction routière. Des exemples de particules solides incluent les particules solides minérales telles les granulats minéraux naturels (gravillons, sable, fines) par exemple issus de carrière ou de gravière, les produits de recyclage tels que les agrégats d'enrobés, par exemple résultant du recyclage des matériaux récupérés lors de la réfection des routes ou des surplus de centrales d'enrobage, les rebuts de fabrication, les « shingles » (« bardeaux », provenant du recyclage des membranes de toitures), les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, les granulats artificiels de toute origine et les granulats provenant par exemple de mâchefers d'incinération des ordures ménagères (MIOM), ainsi que leurs mélanges en toutes proportions.

Les particules solides, en particulier les particules solides minérales, par exemples les granulats minéraux naturels, comprennent typiquement :
- des éléments inférieurs à 0,063 mm (filler ou fines) ;
- du sable dont les éléments sont compris entre 0,063 mm et 2 mm ;
- des gravillons ou granulats, dont les éléments ont des dimensions
   ∘ comprises entre 2 mm et 6 mm ;
   ∘ supérieures à 6 mm ;

La taille des particules solides, en particulier des particules solides minérales, par exemple les granulats minéraux, est mesurée par les essais décrits dans la norme NF EN 933-2 (version mai 1996).

Par « agrégats d'enrobés » sont désignés des fragments d'enrobés (mélange de granulats et de liants bitumineux) provenant de fraisage de couches d'enrobé, de concassage de plaques extraites de chaussées en enrobées, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication). Ces éléments et les autres produits de recyclage peuvent atteindre des dimensions jusqu'à 31,5 mm.

Les « particules solides minérales » sont également désignées par les termes « fraction minérale 0/D ». Cette fraction minérale 0/D peut être séparée en deux granulométries : la fraction minérale 0/d et la fraction minérale d/D.

Les éléments les plus fins (la fraction minérale 0/d) seront ceux compris dans la plage comprise entre 0 et un diamètre maximal que l'on peut fixer entre 2 et 6 mm (de 0/2 à 0/6), avantageusement entre 2 et 4 mm. Les autres éléments (diamètre minimal supérieur à 2, 3, 4, 5 ou 6 mm ; et environ jusqu'à 31,5 mm) constituent la fraction minérale d/D.

Les produits bitumineux sont préparés selon des procédés connus dans le domaine technique.

### Enduits superficiels d'usure

Les enduits superficiels d'usure sont des revêtements superficiels tels que décrits dans le guide « Enduits Superficiels d'Usure », Institut des Routes, des Rues et des Infrastructures pour la Mobilité, Cerema, Septembre 2017. Typiquement, un enduit superficiel d'usure désigne une couche constituée de couches superposées d'un liant hydrocarboné et de particules solides, en particulier des particules solides minérales. Il est typiquement obtenu en pulvérisant un liant hydrocarboné puis en épandant sur ce liant des particules solides minérales, en une ou plusieurs couches. L'ensemble est ensuite compacté. Un enduit superficiel nécessite non seulement un liant qui soit suffisamment fluide pour pouvoir être pulvérisé mais également un liant qui permette un bon accrochage des particules solides minérales sur le support.

Dans le cadre de la présente invention, les enduits superficiels d'usure sont préparés par pulvérisation d'une émulsion cationique sur des particules solides, en particulier des particules solides minérales, ou par pulvérisation d'une émulsion cationique sur un support puis en épandant sur l'émulsion cationique des particules solides, en particulier des particules solides minérales.

La teneur totale en liant hydrocarboné dans un enduit superficiel d'usure est adaptée en fonction de la structure de l'enduit (mono- ou bi-couche, type de gravillonnage), de la nature du liant hydrocarboné et de la dimension des particules solides minérales, en particulier des granulats, en suivant par exemple les préconisations du document « Enduits superficiels d'usure - Guide technique, mai 1995 ».

Le liant hydrocarboné employé pour la fabrication d'un enduit superficiel d'usure peut être un bitume pur ou modifié par des polymères, tel que décrits précédemment.

Dans le cadre de la présente invention, les enduits superficiels d'usure sont préparés au moyen d'une émulsion cationique de liant hydrocarboné comprenant typiquement, par rapport au poids total de l'émulsion cationique, de 0,01% à 0,1% en poids d'un polymère anionique ou de leurs mélanges.

### Couches d'accrochage ou de surface de type Fog seal

Une couche d'accrochage désigne une couche constituée d'un liant hydrocarboné typiquement obtenu en pulvérisant une émulsion dudit liant hydrocarboné sur un support de couche de chaussée. La couche d'accrochage est appliquée sur un support afin de consolider l'interface entre le support et une couche de produit bitumineux appliqué ultérieurement. La couche d'accrochage a pour principale fonction d'améliorer la longévité d'une chaussée, en évitant les cisaillements entre les couches. Les conditions aux interfaces des couches sont très importantes et le dimensionnement optimal de la chaussée implique un collage effectif et pérenne des couches entre elles. Les performances de la couche d'accrochage dépendent notamment des points suivants :
- le comportement de montée en cohésion et de prise ;
- la viscosité pour permettre la pulvérisation de l'émulsion ;
- la solidité de la liaison entre les couches ;
- l'adhésion aux pneumatiques qui doit être limitée afin de ne pas générer de décollement à l'application de la couche supérieure.

La capacité d'adhésion et de cohésion de la couche d'accrochage dépend du dosage en liant résiduel appliqué sur le support, de la nature de l'enrobé bitumineux, de la nature du support et de la cohésion du liant bitumineux employé pour la formulation de l'émulsion d'accrochage. Le dosage minimal en liant résiduel d'une couche d'accrochage varie de 250 à 400g/m² selon la nature de l'enrobé comme précisé dans la norme NF P 98150-1 (Juin 2010). Ces dosages sont à adapter à l'état du support. La couche d'accrochage est répandue de façon continue à l'aide d'un dispositif mécanique de répandage ; et elle peut être légèrement gravillonnée (par exemple de l'ordre de 3l/m² de gravillon).

Les couches de surface de type fog seal tirent leur nom du procédé de préparation qui consiste à répandre un voile d'émulsion sur une surface. Le procédé fog seal pour la préparation de couches de surface consiste avantageusement à pulvériser une émulsion de liant hydrocarboné après dilution pour faciliter l'application de faibles dosages. L'émulsion est généralement appliquée sur une surface bitumineuse existante. Les objectifs de ce procédé sont multiples et consistent notamment à améliorer l'aspect esthétique en apportant une couleur noire homogène à la chaussée, augmenter la durée de vie de la chaussée en protégeant les couches sous-jacentes de l'oxydation et de l'infiltration d'eau (étanchéité) et fixer les granulats en surface afin d'éviter les arrachements. Les dosages en liant résiduel d'une couche de fog seal varient entre 50 et 230 g/m² selon la nature et l'état du support. La couche de fog seal peut être légèrement recouverte d'un sable fin afin d'améliorer la microtexture et l'adhérence de la couche de roulement.

Une couche d'accrochage ou une couche de surface de type fog seal nécessite non seulement une émulsion suffisamment fluide pour être pulvérisée mais également une émulsion qui possède une rupture suffisamment rapide afin de réouvrir la circulation dans des délais brefs.

La vitesse de rupture d'une émulsion pour couche d'accrochage ou couche de surface de type fog seal peut être évaluée par un essai consistant à mesurer le temps nécessaire pour une émulsion à durcir à partir de son contact avec le support. La rupture peut être accélérée par répandage simultané sur la chaussée d'une émulsion de bitume et d'un agent de rupture (solution basique de carbonate de sodium par exemple) projeté dans les jets de l'émulsion qui permet une rupture rapide et homogène de l'émulsion au moment de son épandage.

Les inventeurs ont découvert que les polymères anioniques utiles dans le cadre de la présente invention peuvent permettre de fortement accélérer la rupture de l'émulsion de liant hydrocarboné, tout particulièrement en l'absence d'un agent rupteur.

L'émulsion cationique de liant hydrocarboné comprenant le polymère anionique peut être pulvérisée sur le support puis éventuellement recouvert par un dosage léger en particules solides minérales.

Dans l'émulsion de liant hydrocarboné pour la réalisation d'une couche d'accrochage, la teneur en liant varie avantageusement de 50 à 75% en poids de liant, par rapport au poids total de l'émulsion, plus avantageusement de 55 à 70% en poids, encore plus avantageusement de 60 à 65% en poids.

Dans l'émulsion de liant hydrocarboné pour la réalisation d'une couche de surface de type fog seal, la teneur en liant varie avantageusement de 20 à 60% en poids de liant, par rapport au poids total de l'émulsion, plus avantageusement de 25 à 50% en poids, encore plus avantageusement de 30 à 40% en poids. L'émulsion de liant hydrocarboné est généralement fabriquée avec une teneur en liant qui varie entre 60 à 65% en poids puis l'émulsion de liant hydrocarboné est diluée pour atteindre une teneur en liant telle que décrite au-dessus.

Dans le cadre de la présente invention, les couches d'accrochage ou de surface sont préparées au moyen d'une émulsion cationique de liant hydrocarboné comprenant typiquement, par rapport au poids total de l'émulsion cationique, de 0,005% à 0,1% en poids d'un polymère anionique ou de leurs mélanges.

### Joints de pavés

La technique de pavage avec joint à l'émulsion de bitume est une technique très ancienne particulièrement bien adaptée à la réalisation de trottoirs, places, parvis, aux zones de très forts trafics, voies et arrêts de bus, aux sites, centre villes et rues classés ou à caractère historique, au besoin d'un revêtement esthétique original. Cette technique consiste à poser des pavés sur un lit de pose constitué de particules solides minérales, avantageusement un sable 0/4 ou 0/6 mm sans fines, en maintenant un espacement d'environ 1 à 2 cm. Les espacements entre pavés sont ensuite comblés avec des particules solides minérales, généralement des particules 2/4 mm, puis une émulsion de liant hydrocarboné est répandue dans les espacements entre pavés à hauteur de 10L/m² pour constituer le joint souple. Le pavage est réalisé selon les règles de l'art, conformément aux recommandations de la norme NF P 98-335 (Mai 2007), et celles contenues dans le fascicule 29 du CCTG.

L'émulsion de liant hydrocarboné utilisée pour la technique de pavage est une émulsion cationique de liant hydrocarbonée, notamment de bitume, à rupture rapide possédant une teneur en liant hydrocarboné de 60 ou 65% afin d'obtenir une émulsion fluide pénétrant facilement dans les joints. Une fois au contact des particules solides minérales dans l'espacement entre les pavés, l'émulsion de liant hydrocarboné doit présenter une rupture rapide et franche afin de limiter les risques de lessivage du joint en cas de temps de pluie quelques heures après la préparation des joints.

Dans le cadre de la présente invention, l'émulsion cationique de liant hydrocarboné comprenant un polymère anionique est répandue dans les espacements entre pavés au contact des particules solides (par exemple des particules solides minérales).

Les inventeurs ont découvert que les polymères utiles dans le cadre de la présente invention peuvent permettre de fortement accélérer la rupture de l'émulsion de liant hydrocarboné au contact des particules solides dans l'espacement entre les pavés.

Dans l'émulsion cationique de liant hydrocarboné, la teneur en liant varie avantageusement de 50 à 75% en poids de liant, par rapport au poids total de l'émulsion, plus avantageusement de 55 à 70% en poids, encore plus avantageusement de 60 à 65% en poids.

Dans le cadre de la présente invention, les joints de pavé sont préparés au moyen d'une émulsion cationique de liant hydrocarboné comprenant typiquement, par rapport au poids total de l'émulsion cationique, de 0,01% à 0,1% en poids d'un polymère anionique ou de leurs mélanges.

### EXEMPLES

### Descriptif des méthodes de test :

Détermination de l'adhésivité des émulsions de bitume par l'essai d'immersion dans l'eau selon la norme NF EN 13614 (Juin 2011):
Cette norme européenne décrit une méthode permettant de déterminer les propriétés d'adhésion d'une émulsion de bitume vis-à-vis de granulats en immersion dans l'eau. L'émulsion de bitume est mélangée soigneusement au granulat (lavé/séché) sélectionné dans des conditions spécifiées (23 ± 5)°C. Le mélange est d'abord mûri puis immergé dans l'eau dans des conditions spécifiées (60 ± 3)°C. Le pourcentage de surface de granulat couvert de liant est évalué visuellement dans des conditions spécifiées.

Détermination du comportement à la rupture et de l'adhésivité immédiate des émulsions cationiques de bitume avec un granulat de 2/4mm ou 4/6,3mm (N123-A2f, AFNOR (2019) ; procédure modifiée de la norme XP CEN/TS 16346 de Février 2013) :
Cette méthode permet de déterminer le comportement de rupture, d'évaluer de façon qualitative et quantitative l'adhésivité immédiate des émulsions cationiques de liant hydrocarboné en contact avec un granulat. Cette méthode s'applique aux émulsions utilisées pour les applications d'enduisage.

Des quantités données d'émulsion et de granulat de 2/4 mm ou 4/6,3 mm sont mélangées dans des conditions spécifiées. 200g de granulat sont pesés dans une capsule puis une cavité conique est creusée dans le centre du tas de granulats. Une quantité d'émulsion est ensuite versée rapidement dans la cavité précédemment formée. La masse est de 15,0 g de liant résiduel dans le cas de l'utilisation d'un granulat 2/4mm et 12,0g de liant résiduel dans le cas de l'utilisation d'un granulat 4/6,3mm. La durée nécessaire pour agglomérer le granulat en une masse compacte est une mesure du temps de rupture de l'émulsion. Si la rupture complète (agglomération en une masse compacte unique) n'est pas obtenue au bout de 45 secondes, ne pas poursuivre le mélangeage et le mentionner dans le rapport d'essai en précisant « >45 ». Après 10 minutes ± 15 secondes, le mélange final est soumis à une série de lavages à l'eau (500 ml d'eau claire à température ambiante, 20-25 °C). Une fois la capsule remplie avec de l'eau, attendre (5 ± 1) s, puis vider l'eau de la capsule dans un autre bécher en la passant sur un tamis adéquat permettant de retenir la taille de granulat utilisée. Le nombre de lavages successifs nécessaires à l'obtention d'une eau claire est notée (*N₀*). Lorsque les lavages successifs ne permettent pas d'obtenir une eau claire, la procédure est répétée en étalant les granulats enrobés et en appliquant la procédure de lavage après des temps de repos croissants. A l'obtention d'une eau claire, la quantité de liant résiduel fixée par les granulats est évaluée par pesée après séchage dans une étuve ventilée à (105 ± 5) °C jusqu'à masse constante. Le pourcentage massique de bitume adhérent (qₐ₀) exprime l'adhésivité quantitative.

Détermination de la cinétique et de l'homogénéité de rupture selon un protocole spécifique non normalisé :
Un essai d'évaluation de la cinétique de rupture des émulsions a été mis en place consistant à appliquer de l'émulsion de bitume à la spatule sur une plaque d'enrobés coulés à froid (ECF) à hauteur de 1,75 kg/m² sur une surface de 10*10 cm. La zone revêtue d'émulsion est ensuite gravillonnée avec 110g de granulats 6/10 humides (1% d'humidité) ce qui correspond à un dosage de 11 kg/m² soit environ 9 L/m². L'évaluation de la rupture est réalisée en arrosant d'eau ¼ de plaque gravillonnée de 10*10 cm à un temps définir après le gravillonnage tout en appliquant un mouvement de compression-torsion à sa surface puis en appréciant la coloration des écoulements reflétant la rupture dans la masse de l'émulsion et sa sensibilité à l'eau.

Exemple 1 : Emulsions cationiques de bitume pur de répandage pour enduits superficiels. Des émulsions cationiques de bitume pur ont été préparées avec les polymères anioniques présentés dans le tableau 1.

**Tableau 1**

| | P1 | P2 | P3 | P4 | P5 |
|---|---|---|---|---|---|
| Référence | FLOSPERSE^{®} 3030 NCA W30¹ | FLOSPERSE^{®} CT 39 A¹ | FLOSPERSE^{®} 15000 A¹ | FLOSPERSE^{®} 1050 A CM¹ | FLOSPERSE ^{®} TH 33 M¹ |
| Forme | neutralisée | Non neutralisée | neutralisée | Information non publique | Information non publique |
| Matière sèche | 30% | 40% | 30% | 48% | 36% |
| Anionicité | 70% | 100% | 100% | 100% | 30% |
| pka indicatif | 4-5 | 4-5 | 4-5 | 1,5-2,5/ 5,5 - 6,5 | 4-5 |

### Présentation des polymères anioniques testés. ¹ commercialisé par SNF-Floerger

Les polymères anioniques P1, P2 et P3 correspondent à des polymères anioniques utiles dans le cadre de la présente invention. Les polymères anioniques P4 et P5 sont des polymères anioniques comparatifs. Le polymère anionique P4 comprend des groupements ionisables ayant un pka indicatif de 4-5 et des groupements ionisables ayant un pka indicatif de 5,5 - 6,5.

Les compositions des émulsions cationiques préparées sont présentées dans le tableau 2. Dans le tableau 2, les dosages présentés sont exprimés en kilogramme par tonne d'émulsion (kg/t).

**Tableau 2**

| | R1 | E1 | E2 | E3 | E4 | E5 | EC1 | EC2 |
|---|---|---|---|---|---|---|---|---|
| | Bitume 70/100 Esso Port Jérôme (dosage : 690kg/t) | | | | | | | |
| | Phase aqueuse (dosage : 310kg/t) | | | | | | | |
| Agent Tensioactif (kg/t) | AT1¹ | AT1¹ | AT1¹ | AT1¹ | AT1¹ | AT2² | AT1¹ | AT1¹ |
| | 2,0 | 2,0 | 2,0 | 2,0 | 2,0 | 1,3 | 2,0 | 2,0 |
| Acide (kt/t) | HCl | HCl | HCl | HCl | HCl | HCl | HCl | HCl |
| | 1,0 | 1,0 | 1,0 | 1,0 | 1,0 | 1,0 | 1,0 | 1,0 |
| Polymère anionique (kg/t) | / | P1 | P2 | P3 | P2 | P2 | P4 | P5 |
| | 0 | 0,5 | 0,5 | 0,5 | 0,25 | 0,5 | 0,5 | 0,5 |
| Eau (kg/t) | 307 | 306,5 | 306,5 | 306,5 | 306,75 | 307,2 | 306,5 | 306,5 |

| | | | | | | | | |
|---|---|---|---|---|---|---|---|---|
| Compositions des émulsions cationiques. ¹AT1 : Emulsamine^{®} L60 commercialisé par Arkema. ²AT2 : Dinoram^{®} S commercialisé par Arkema. | | | | | | | | |

L'émulsion R1 est une émulsion de référence ne comprenant pas de polymère anionique.

Les émulsions E1, E2, E3, E4 et E5 sont des émulsions selon l'invention.

Les émulsions EC1 et EC2 sont des émulsions comprenant un polymère anionique ne répondant pas aux critères définis pour les polymères anioniques utiles dans le cadre de la présente invention.

Les émulsions R1, E1, E2, E3, E4, E5, EC1 et EC2 ont été préparées en suivant le même protocole d'émulsification, avec le même tensioactif (HCl/amine).

Les propriétés des émulsions de liant sont reportées dans le tableau 3.

**Tableau 3**

| | R1 | E1 | E2 | E3 | E4 | E5 | EC1 | EC2 |
|---|---|---|---|---|---|---|---|---|
| pH : NF EN 12850 | | | | | | | | |
| pH de la phase aqueuse | 2,5 | 2,7 | 2,4 | 2,3 | 2,5 | 2,4 | 2,5 | 2,5 |
| pH de l'émulsion | 3,5 | 3,5 | 2,8 | 2,9 | 3,1 | 2,9 | / | 3,3 |

| PSEUDO VISCOSITE : NF EN 12846-1 | | | | | | | | |
|---|---|---|---|---|---|---|---|---|
| STV 4 mm à 40°C, s | 14 | 16 | 69 | 17 | 11 | 15 | / | / |
| STV 2 mm à 40°C, s | 161 | 182 | 884 | 187 | 118 | 237 | / | / |

| HOMOGENEITE par TAMISAGE : NF EN 1429 | | | | | | | | |
|---|---|---|---|---|---|---|---|---|
| Refus à 0,500 mm (%) | 0,01 | 0,04 | 0,14 | 0,03 | 0,08 | 0,02 | / | / |
| Refus à 0,160 mm (%) | 0,02 | 0,12 | 0,19 | 0,08 | 0,29 | 0,06 | / | / |

| GRANULOMETRIE LASER (Malvern) : MEI | | | | | | | | |
|---|---|---|---|---|---|---|---|---|
| Diamètre médian (µm) | 8,61 | 10,13 | 8,72 | 7,55 | 10,06 | 9,19 | / | / |
| Déviation standard | 0,34 | 0,37 | 0,29 | 0,33 | 0,37 | 0,33 | / | / |

| VISCOSITE DYNAMIQUE : NF EN 13302 | | | | | | | | |
|---|---|---|---|---|---|---|---|---|
| Viscosité dynamique à 40°C (mPa.s) | 214 | 111 | 398 | 151 | 100 | 130 | / | / |

| INDICE DE RUPTURE : NF EN 13075-1 | | | | | | | | |
|---|---|---|---|---|---|---|---|---|
| Caolin Q92 | 55 | 48 | 72 | 23 | 72 | 56 | / | / |
| Forshammer | 66 | 58 | 86 | 28 | 86 | 67 | / | / |

| DECANTATION : NF EN 12847 | | | | | | | | |
|---|---|---|---|---|---|---|---|---|
| Décantation à 7 jours à 25°C (%) | 2,3 | 1,6 | 6,7 | 9,4 | 2,3 | 1,2 | / | / |

### Propriétés des émulsions

Les propriétés des émulsions EC1 et EC2 n'ont pu être déterminées. L'émulsion EC1 s'est avérée être instable dès deux heures après sa fabrication, et ce en dépit du pH de la phase aqueuse fixé à 2,5. L'émulsion EC2 s'est quant à elle avérée présenter une consistance extrêmement visqueuse. Ainsi, seul son pH (3,3) et la teneur en liant (69,1%) ont pu être déterminés.

Les propriétés des autres émulsions sont conformes aux spécifications attendues (NF EN 13808). Quelques variations de propriétés sont observées entre l'émulsion de référence R1 et les émulsions de l'invention (E1, E2, E3, E4 et E5). Notamment l'émulsion E1 présente un diamètre médian des gouttelettes de bitume légèrement plus important que l'émulsion de référence R1, l'émulsion E2 présente une viscosité (STV et viscosité dynamique) plus importante que l'émulsion de référence et l'émulsion E3 présente un indice de rupture nettement plus bas que celui mesuré pour l'émulsion R1. Cependant les propriétés mesurées pour toutes ces émulsions permettent un usage en technique d'enduit superficiel d'usure (ESU). Cela démontre que les polymères anioniques tels que définis dans la présente invention modifient que très faiblement les propriétés des émulsions de bitume par rapport à une émulsion de référence sans polymère anionique. En particulier, dans les conditions de fabrication, de stockage et de transport conventionnelles, les émulsions de bitume de l'invention sont stables.

L'adhésivité passive des émulsions cationiques R1, E1, E2, E3 et E4 a été déterminée par un essai d'immersion dans l'eau selon la norme NF EN 13614 (Juin 2011) avec des granulats 6/10 La Meilleraie (200 g lavés et séchés). Les résultats sont reportés dans le tableau 4.

**Tableau 4**

| | R1 | E1 | E2 | E3 | E4 |
|---|---|---|---|---|---|
| Granulat | 6/10 La Meilleraie - lavé/séché | | | | |
| Nature minéralogique | Matériau éruptif - roche Diorite | | | | |
| Ratio massique granulat/liant résiduel | 200/10 | 200/10 | 200/10 | 200/10 | 200/10 |
| Note (% recouvrement) | 90 | 90 | 90 | 90 | 90 |

Adhésivité passive des émulsions de bitume par l'essai d'immersion dans l'eau selon la norme NF EN 13614 (Juin 2011)

Un enrobage satisfaisant (90% de surface recouverte après immersion dans l'eau) a été obtenu avec 10g de liant résiduel pour chacune des émulsions. Ces résultats démontrent que les polymères anioniques utiles dans le cadre de l'invention n'ont aucun impact négatif sur l'adhésivité passive entre le liant et les matériaux granulaires.

L'adhésivité immédiate des émulsions cationiques R1, E1, E2, E3, E4 et E5 en contact avec des granulats 4/6,3 La Meilleraie a été évaluée de manière qualitative et quantitative selon la procédure modifiée TS 16346 (Septembre 2019) décrite dans la partie « Descriptif des méthodes de test ». Cette procédure modifiée est issue de la norme XP CEN/TS 16346 (Février 2013). Les résultats sont présentés dans le tableau 5.

**Tableau 5**

| | R1 | E1 | E2 | E3 | E4 | E5 |
|---|---|---|---|---|---|---|
| Granulat 4/6 La Meilleraie | masse compacte | masse compacte | masse compacte | masse compacte | masse compacte | Masse compacte |
| Temps de mélangeage (s) | > 45 | > 45 | > 45 | 20 | > 45 | > 45 |
| Nombre de lavages | 7 | 1 | 2 | 3 | 2 | 3 |
| Adhésivité quantitative immédiate (%) | 70 | 100 | 100 | 97 | 100 | 98 |

### Adhésivité immédiate selon la procédure modifiée TS 16346 (Septembre 2019)

Les résultats obtenus démontrent que l'utilisation des polymères anioniques P1 et P2 ne modifie pas le comportement d'enrobage : la durée nécessaire pour agglomérer les granulats en une masse compacte (temps de rupture de l'émulsion) n'est pas modifiée par les polymères coagulants hormis le polymère coagulant P3 qui diminue ce temps de mélangeage.

Concernant le nombre de lavages nécessaires à l'obtention d'une eau claire en masse compacte, cette valeur est fortement diminuée par ajout des polymères anioniques P1, P2 et P3. Notamment, le polymère anionique P1 permet d'obtenir une eau claire en un seul lavage et l'adhésivité quantitative immédiate après ce lavage est de 100%. Le temps de repos avant lavage des granulats agglomérés étant de 10 minutes, le temps de rupture de l'émulsion est donc évalué inférieur à 10 minutes. Les polymères anioniques tels que décrits dans la présente invention améliorent donc considérablement la cinétique de rupture de l'émulsion au contact des granulats et permettent d'atteindre une adhésivité quantitative immédiate très nettement améliorée. L'émulsion E2 amène à une eau claire après 2 lavages contre 7 lavages pour l'émulsion de référence R1 alors que l'indice de rupture de l'émulsion E2, mesurée par l'essai de la norme 13075-1, est supérieur à celui mesurée pour l'émulsion de référence R1. Cela démontre la pertinence de la procédure modifiée de la norme TS 16346 (Septembre 2019) pour l'évaluation de la rupture de l'émulsion au contact des granulats ainsi que pour l'évaluation du comportement des polymères coagulants dans les formules d'émulsions. Enfin, les essais réalisés avec l'émulsion E5 permettent de démontrer que les polymères de l'invention sont efficaces lorsqu'un tensioactif cationique différent (Dinroam^{®} S) est employé. Cela montre la versatilité des polymères de l'invention vis-à-vis des différentes formules d'émulsion de répandage.

La cinétique de rupture a été évaluée pour chaque émulsion selon le protocole cité précédemment. L'appréciation de la rupture a été réalisée à 30min, 1 h, 2h et 3h après le gravillonnage avec les matériaux 6/10 La Meilleraie. Les résultats figurent dans le tableau 6.

**Tableau 6**

| | RI* | E2 | E4 | E5 |
|---|---|---|---|---|
| t0 + 30 min | Marron foncé | Marron clair | Marron clair | Marron |
| t0 + 1 h | Marron foncé | Incolore | Incolore | Marron |
| t0 + 2h | Marron foncé | / | / | Marron clair |
| t0 + 3h | Marron foncé | / | / | Incolore |

Cinétique et homogénéité de rupture des émulsions avec les matériaux 6/10 La Meilleraie - * R1 incolore après 24h

Les émulsions selon l'invention (E2, E4 et E5) présentent une cinétique de rupture homogène nettement plus rapide que l'émulsion de référence (R1).

L'effet des polymères anioniques a également été démontré en réalisant des mesures de potentiel Zeta en fonction du pH à l'aide d'un appareil Nanosizer Nano ZS (Malvern Panalyticals). Les essais ont été réalisés en préparant des solutions à différentes valeurs de pH afin d'observer la stabilité des gouttelettes de bitume selon le pH. Les résultats figurent dans le tableau 7.

**Tableau 7**

| Potentiel Zeta (mV) | | | | | | |
|---|---|---|---|---|---|---|
| pH | R1 | E1 | E2 | E3 | E4 | E5 |
| 2,0 | 116 | 106 | 108 | 107 | 109 | 99,8 |
| 3,0 | 116 | 112 | 105 | 112 | 110,3 | 95,6 |
| 4,0 | 98 | 87 | 79 | 88 | 88,7 | 71,9 |
| 5,5 | 79 | 67 | 18 | 38 | 25,7 | 22,1 |
| 8,3 | 88 | 31 | -6 | 14 | 30,4 | 10,2 |

### Mesures des potentiels Zeta en fonction du pH

Le potentiel Zeta est relativement semblable pour les différentes émulsions à un pH inférieur à 4. En revanche, à partir d'une valeur de pH de 4, le potentiel Zeta des émulsions de l'invention (E1, E2 et E3) diminue rapidement contrairement à l'émulsion de référence R1 qui conserve des valeurs de potentiel Zeta hautes même à pH élevé.

Ces résultats témoignent du bénéfice des polymères anioniques sur la cinétique de rupture des émulsions en lien avec une remontée du pH. La déstabilisation des émulsions contenant les polymères anioniques s'opère à partir d'un pH de 5, valeur en cohérence avec la valeur déclarée du pKa des polymères P1, P2 et P3 par le fournisseur.

Exemple 2 : Emulsions cationiques de bitume modifiées au latex pour enduits superficiels. Des émulsions cationiques de bitume modifiées au latex ont été préparées avec le polymère anionique P2 présenté dans le tableau 1.

Les compositions des émulsions cationiques préparées sont présentées dans le tableau 7. Dans le tableau 8, les dosages présentés sont exprimés en kilogramme par tonne d'émulsion (kg/t).

**Tableau 8**

| | R2 | E6 |
|---|---|---|
| | Bitume 70/100 Esso Port Jérôme (dosage : 697kg/t) | |
| | Phase aqueuse (dosage : 303kg/t) | |
| Agent Tensioactif (kg/t) | Emulsamine^{®} L60¹ | Emulsamine^{®} L60¹ |
| | 2,3 | 2,3 |
| Acide (kt/t) | HCl | HCl |
| | 1,4 | 1,4 |
| Polymère anionique (kg/t) | / | P2 |
| | 0 | 0,5 |
| Latex (kg/t) | Valoflex^{®} C1² | Valoflex^{®} C1² |
| | 15 | 15 |
| Eau (kg/t) | 284,3 | 283,8 |

Compositions des émulsions cationiques - ¹ commercialisé par Arkema - ² commercialisé par Valochem.

L'émulsion R2 est une émulsion de référence ne comprenant pas de polymère anionique. L'émulsion E6 est une émulsion selon l'invention. Les propriétés des émulsions de bitume modifiées au latex sont reportées dans le tableau 9.

**Tableau 9**

| | R2 | E6 |
|---|---|---|
| pH : NF EN 12850 | | |
| pH de la phase aqueuse | 2,1 | 2,1 |
| pH de l'émulsion | 2,8 | 2,7 |

| PSEUDO VISCOSITE : NF EN 12846-1 | | |
|---|---|---|
| STV 4 mm à 40°C, s | 9 | 12 |
| STV 2 mm à 40°C, s | 99 | 135 |

| HOMOGENEITE par TAMISAGE : NF EN 1429 | | |
|---|---|---|
| Refus à 0,500 mm (%) | 0,01 | 0,01 |
| Refus à 0,160 mm (%) | 0,06 | 0,08 |

| STABILITE AU STOCKAGE PAR TAMISAGE : NF EN 1429 | | |
|---|---|---|
| N (jours de stockage) | 7 | 7 |
| Refus à 0,500 mm (%) | 0,01 | 0,01 |

| GRANULOMETRIE LASER (Malvern) : MEI | | |
|---|---|---|
| Diamètre médian (µm) | 7,37 | 7,36 |
| Déviation standard | 0,39 | 0,4 |

| VISCOSITE DYNAMIQUE : NF EN 13302 | | |
|---|---|---|
| Viscosité dynamique à 40°C (mPa.s) | 174 | 571 |

| INDICE DE RUPTURE : NF EN 13075-1 | | |
|---|---|---|
| Caolin Q92 | 94 | 91 |
| Forshammer | 113 | 109 |

### Propriétés des émulsions

Les propriétés de l'émulsion de référence R2 comme de l'émulsion de l'invention E6 sont conformes aux spécifications attendues (NF EN 13808). Les deux émulsions présentent des propriétés similaires. Cela démontre que les polymères anioniques tels que définis dans la présente invention modifient que très faiblement les propriétés des émulsions de bitume par rapport à une émulsion de référence sans polymère anionique. En particulier, dans les conditions de fabrication, de stockage et de transport conventionnelles, les émulsions de bitume de l'invention sont stables.

L'adhésivité immédiate des émulsions cationiques R2 et E6 en contact avec des granulats 4/6,3 La Meilleraie a été évaluée de manière qualitative et quantitative selon la procédure modifiée TS 16346 (Septembre 2019) décrite dans la partie « Descriptif des méthodes de test ». Cette procédure modifiée est issue de la norme XP CEN/TS 16346 de Février 2013. Les résultats sont présentés dans le tableau 10.

**Tableau 10**

| | R2 | E6 |
|---|---|---|
| Granulat 4/6 La Meilleraie | masse compacte | masse compacte |
| Temps de mélangeage (s) | > 45 | > 45 |
| Nombre de lavages | 3 | 1 |
| Adhésivité quantitative immédiate (%) | 99 | 99 |

### Adhésivité immédiate selon la procédure modifiée TS 16346 (Septembre 2019)

Les résultats obtenus démontrent que l'utilisation du polymère anionique P2 ne modifie pas le comportement d'enrobage : la durée nécessaire pour agglomérer les granulats en une masse compacte (temps de rupture de l'émulsion) n'est pas modifiée par le polymère coagulant.

Concernant le nombre de lavages nécessaires à l'obtention d'une eau claire en masse compacte, cette valeur est diminuée par ajout du polymère anionique P2. Seul un lavage est nécessaire à l'obtention d'un eau claire et l'adhésivité quantitative immédiate après ce lavage est de 99%.

L'adhésivité immédiate des émulsions cationiques R2 et E6 a également été évaluée en contact avec des granulats 4/6,3 Vignoc de nature Cornéenne afin d'évaluer l'efficacité de la présente invention avec des matériaux de nature pétrographique différente. Les résultats sont présentés dans le tableau 11.

**Tableau 11**

| | R2 | E6 |
|---|---|---|
| Granulat 4/6 Vignoc | masse compacte | masse compacte |
| Temps de mélangeage (s) | > 45 | > 45 |
| Nombre de lavages | > 8 | 2 |
| Adhésivité quantitative immédiate (%) | 66 | 96 |

Les résultats obtenus démontrent que l'utilisation du polymère anionique P2 permet de sensiblement diminuer le nombre de lavages pour l'obtention d'une eau claire et permet également de sensiblement augmenter l'adhésivité quantitative immédiate.

La cinétique de rupture a été évaluée pour chaque émulsion selon le protocole cité précédemment. L'appréciation de la rupture a été réalisée à 1h, 2h, 3h et 24h après le gravillonnage. Les résultats obtenus avec les granulats 6/10 La Meilleraie figurent dans le tableau 12.

**Tableau 12**

| | R2 | E6 |
|---|---|---|
| t0 + 1h | Marron foncé | Marron clair |
| t0 + 2h | Marron foncé | incolore |
| t0 + 3h | Marron foncé | incolore |
| t0 + 24h | incolore | incolore |

### Cinétique et homogénéité de rupture des émulsions avec les matériaux 6/10 La Meilleraie

L'émulsion selon l'invention (E6) présente une cinétique de rupture homogène nettement plus rapide que l'émulsion de référence (R2).

L'effet du polymère anionique P2 a également été démontré en réalisant des mesures de potentiel Zeta en fonction du pH à l'aide d'un appareil Nanosizer Nano ZS (Malvern Panalyticals). Les essais ont été réalisés en préparant des solutions à différentes valeurs de pH afin d'observer la stabilité des gouttelettes de bitume selon le pH. Les résultats figurent dans le tableau 13.

**Tableau 13**

| | Potentiel Zeta (mV) | |
|---|---|---|
| pH | R2 | E6 |
| 2,0 | 102 | 102,2 |
| 3,0 | 98 | 105,3 |
| 4,0 | 89,3 | 88,3 |
| 5,5 | 70,3 | 51,4 |
| 8,3 | 75,1 | 15,8 |

### Mesures des potentiels Zeta en fonction du pH

Le potentiel Zeta est relativement semblable pour les différentes émulsions à un pH inférieur à 4. En revanche, à partir d'une valeur de pH de 4, le potentiel Zeta des émulsions de l'invention (E6) diminue rapidement contrairement à l'émulsion de référence R2 qui conserve des valeurs de potentiel Zeta hautes même à pH élevé.

Ces résultats témoignent du bénéfice du polymère P2 sur la cinétique de rupture des émulsions en lien avec une remontée du pH. La déstabilisation de l'émulsion contenant le polymère anionique P2 s'opère à partir d'un pH de 5, valeur en cohérence avec la valeur déclarée du pKa du polymère P2 par le fournisseur.

## Revendications

1. Utilisation d'un polymère anionique pour améliorer l'adhésivité immédiate d'une émulsion cationique de liant hydrocarboné de répandage à des particules solides lors de la préparation d'un produit bitumineux, ledit polymère anionique comprenant uniquement des groupements ionisables acides dont le pKa varie de 4 à 5, ayant un taux d'anionicité variant de 50 à 100% et un poids moléculaire variant de 500 à 500 000 g/mol.

2. Utilisation selon la revendication 1, dans laquelle le poids moléculaire du polymère varie de 1000 à 250 000 g/mol.

3. Utilisation selon la revendication 1 ou 2, dans laquelle le polymère anionique est issu de la polymérisation de monomères ionisables acides comprenant un ou plusieurs groupements carboxyliques ou phosphoniques.

4. Utilisation selon la revendication 3, dans laquelle les monomères ionisables acides sont choisis dans le groupe comprenant l'acide acrylique, l'acide méthacrylique, l'acide maléique, l'acide itaconique, l'acide fumarique et leurs mélanges.

5. Utilisation selon l'une quelconque des revendications précédentes, dans laquelle le polymère anionique est choisi dans le groupe comprenant les homopolymères d'acide acrylique, les copolymères d'acide acrylique/acrylamide, les copolymères d'acide maléique/acide acrylique, les homopolymères d'acide méthacrylique, les copolymères d'acide acrylique/acide méthacrylique, les copolymères d'acide acrylique/acrylate et les terpolymères d'acide acrylique.

6. Utilisation selon l'une quelconque des revendications précédentes, dans laquelle l'adhésivité immédiate quantitative de l'émulsion cationique est supérieure à 90% après moins de huit lavages à l'eau, telle que mesurée selon l'essai modifié (N123-A2f de l'AFNOR, 2019) de la norme TS 16346(2013).

7. Utilisation selon l'une quelconque des revendications précédentes, dans laquelle le produit bitumineux est choisi parmi les enduits superficiels d'usure, les couches d'accrochage, les couches de surface de type fog seal et les joints de pavés.

8. Utilisation selon l'une quelconque des revendications précédentes, dans laquelle le liant hydrocarboné est un bitume pur ou modifié.

9. Procédé d'amélioration de l'adhésivité immédiate d'une émulsion cationique de liant hydrocarboné de répandage à des particules solides lors de la préparation d'un produit bitumineux, ledit procédé comprenant la préparation d'une émulsion cationique de liant hydrocarboné comprenant un polymère anionique tel que décrit dans l'une des revendications 1 à 5.

10. Procédé selon la revendication 9 dans lequel la préparation de l'émulsion cationique comprend les étapes suivantes :
(a) incorporation d'un polymère anionique tel que défini dans l'une des revendications 1 à 5 à une phase aqueuse comprenant au moins un agent tensioactif cationique, le pH de la phase aqueuse étant compris entre 1,5 et 2,5 ; puis
(b) émulsification de la phase aqueuse issue de l'étape a) par addition d'un liant hydrocarboné.

11. Procédé selon la revendication 9 ou 10 dans lequel l'émulsion cationique comprend de 0,005 à 0,5 % en masse d'un polymère anionique tel que décrit dans l'une des revendications 1 à 5 par rapport à la masse totale de l'émulsion.

12. Procédé de préparation d'un produit bitumineux comprenant une étape d'application par répandage d'une émulsion cationique de liant hydrocarboné de répandage en surface d'une couche comprenant des particules solides, ladite émulsion cationique de liant hydrocarboné de répandage comprenant un polymère anionique tel que décrit dans l'une des revendications 1 à 5.

13. Procédé de préparation d'un produit bitumineux comprenant une étape d'application par répandage d'une émulsion cationique de liant hydrocarboné de répandage en surface d'un support suivi de l'application d'une couche de particules solides, ladite émulsion cationique de liant hydrocarboné de répandage comprenant un polymère anionique tel que décrit dans l'une des revendications 1 à 5.

## Patentansprüche

1. Verwendung eines anionischen Polymers zur Verbesserung der Sofortklebkraft einer kationischen Kohlenwasserstoff-Bindemittelemulsion zum verteilen gegenüber festen Partikeln bei der Herstellung eines bituminösen Produkts, wobei das anionische Polymer nur saure ionisierbare Gruppen mit einem pKa-Wert im Bereich von 4 bis 5 mit einer Anionizität im Bereich von 50 bis 100 % und einem Molekulargewicht im Bereich von 500 bis 500 000 g/mol.

2. Verwendung gemäß Anspruch 1, wobei das Molekulargewicht des Polymers im Bereich von 1 000 bis 250 000 g/mol liegt.

3. Verwendung gemäß Anspruch 1 oder 2, wobei das anionische Polymer aus der Polymerisation von säureionisierbaren Monomeren mit einer oder mehreren Carboxyl- oder Phosphonsäuregruppen stammt.

4. Verwendung gemäß Anspruch 3, wobei die säureionisierbaren Monomere aus der Gruppe ausgewählt sind, die Acrylsäure, Methacrylsäure, Maleinsäure, Itaconsäure, Fumarsäure und Mischungen davon umfasst.

5. Verwendung gemäß einem der vorstehenden Ansprüche, wobei das anionische Polymer aus der Gruppe ausgewählt ist, die aus Acrylsäure-Homopolymeren, Acrylsäure/Acrylamid-Copolymeren, Maleinsäure/Acrylsäure-Copolymeren, Methacrylsäure-Homopolymeren, Acrylsäure/Methacrylsäure-Copolymeren, Acrylsäure/Acrylat-Copolymeren und Acrylsäure-Terpolymeren besteht.

6. Verwendung gemäß einem der vorstehenden Ansprüche, wobei die quantitative Sofortklebkraft der kationischen Emulsion nach weniger als acht Waschvorgängen mit Wasser größer als 90 % ist, gemessen gemäß dem modifizierten Test (AFNOR N123-A2f, 2019) der Norm TS 16346(2013).

7. Verwendung gemäß einem der vorstehenden Ansprüche, wobei das bituminöse Produkt aus Oberflächenverschleißbeschichtungen, Haftschichten, Nebelversiegelungs-Oberflächenschichten und Pflasterfugen ausgewählt ist.

8. Verwendung gemäß einem der vorstehenden Ansprüche, wobei das Kohlenwasserstoffbindemittel reines oder modifiziertes Bitumen ist.

9. Verfahren zur Verbesserung der sofortigen Sofortklebkraft einer kationischen Kohlenwasserstoffbindemittelemulsion zum verteilen an festen Partikeln bei der Herstellung eines bituminösen Produkts, wobei das Verfahren die Herstellung einer kationischen Kohlenwasserstoffbindemittelemulsion umfasst, die ein anionisches Polymer gemäß einem der Ansprüche 1 bis 5 umfasst.

10. Verfahren nach Anspruch 9, wobei die Herstellung der kationischen Emulsion die folgenden Schritte umfasst:
(a) Einbringen eines anionischen Polymers, wie in einem der Ansprüche 1 bis 5 definiert, in eine wässrige Phase, die mindestens ein kationisches Tensid umfasst, wobei der pH-Wert der wässrigen Phase zwischen 1,5 und 2,5 liegt; dann
(b) Emulgieren der aus Schritt a) resultierenden wässrigen Phase durch Zugabe eines Kohlenwasserstoffbindemittels.

11. Verfahren nach Anspruch 9 oder 10, wobei die kationische Emulsion 0,005 bis 0,5 Masse% eines anionischen Polymers, wie in einem der Ansprüche 1 bis 5 beschrieben, bezogen auf das Gesamtmasse der Emulsion, umfasst.

12. Verfahren zur Herstellung eines bituminösen Produkts, umfassend einen Schritt des Aufbringens einer kationischen Emulsion eines Kohlenwasserstoffbindemittels durch Verteilen auf die Oberfläche einer Schicht, die feste Partikel umfasst, wobei die kationische Emulsion des Kohlenwasserstoffbindemittels ein anionisches Polymer umfasst, wie in einem der Ansprüche 1 bis 5 beschrieben.

13. Verfahren zur Herstellung eines bituminösen Produkts, umfassend einen Schritt des Aufbringens einer kationischen Kohlenwasserstoffbindemittelemulsion auf die Oberfläche eines Substrats durch Verteilen, gefolgt vom Aufbringen einer Schicht aus festen Partikeln, wobei die kationische Kohlenwasserstoffbindemittelemulsion ein anionisches Polymer umfasst, wie in einem der Ansprüche 1 bis 5 beschrieben.

## Claims

1. Use of an anionic polymer to improve the immediate adhesiveness of a cationic hydrocarbon binder spreading emulsion to solid particles during the preparation of a bituminous product, said anionic polymer comprising only acidic ionisable groups with a pKa ranging from 4 to 5, having an anionicity ranging from 50 to 100% and a molecular weight ranging from 500 to 500,000 g/mol.

2. Use according to claim 1, wherein the molecular weight of the polymer ranges from 1,000 to 250,000 g/mol.

3. Use according to claim 1 or 2, wherein the anionic polymer is derived from the polymerisation of acid-ionisable monomers comprising one or more carboxylic or phosphonic groups.

4. Use according to claim 3, wherein the acidic ionisable monomers are selected from the group comprising acrylic acid, methacrylic acid, maleic acid, itaconic acid, fumaric acid and mixtures thereof.

5. Use according to any of the preceding claims, wherein the anionic polymer is selected from the group comprising acrylic acid homopolymers, acrylic acid/acrylamide copolymers, maleic acid/acrylic acid copolymers, methacrylic acid homopolymers, acrylic acid/methacrylic acid copolymers, acrylic acid/acrylate copolymers, and acrylic acid terpolymers.

6. Use according to any of the preceding claims, wherein the quantitative immediate adhesiveness of the cationic emulsion is greater than 90% after less than eight washes with water, as measured according to the modified test (AFNOR N123-A2f, 2019) of standard TS 16346(2013).

7. Use according to any of the preceding claims, wherein the bituminous product is selected from surface wear coatings, bonding layers, fog seal-type surface layers and paving joints.

8. Use according to any of the preceding claims, wherein the hydrocarbon binder is pure or modified bitumen.

9. A method for improving the immediate adhesiveness of a cationic hydrocarbon binder spreading emulsion to solid particles during the preparation of a bituminous product, said method comprising preparing a cationic hydrocarbon binder emulsion comprising an anionic polymer as described in any one of claims 1 to 5.

10. Process according to claim 9, wherein the preparation of the cationic emulsion comprises the following steps:
(a) incorporating an anionic polymer as defined in one of claims 1 to 5 into an aqueous phase comprising at least one cationic surfactant, the pH of the aqueous phase being between 1.5 and 2.5; then
(b) emulsifying the aqueous phase resulting from step a) by adding a hydrocarbon binder.

11. Process according to claim 9 or 10, wherein the cationic emulsion comprises from 0.005 to 0.5% by weight of an anionic polymer as described in one of claims 1 to 5, relative to the total weight of the emulsion.

12. Process for preparing a bituminous product comprising a step of applying by spreading a cationic emulsion of hydrocarbon binder to the surface of a layer comprising solid particles, said cationic hydrocarbon binder emulsion comprising an anionic polymer as described in one of claims 1 to 5.

13. Process for preparing a bituminous product comprising a step of applying by spreading a cationic hydrocarbon binder emulsion on the surface of a substrate, followed by the application of a layer of solid particles, said cationic hydrocarbon binder emulsion comprising an anionic polymer as described in one of claims 1 to 5.
